# FASCICULE DE BREVET EUROPEEN

(11) **EP 3 541 644 B1**
(45) Date de publication et mention de la délivrance du brevet: **16.06.2021**
(21) Numéro de dépôt: 17804608.2
(22) Date de dépôt: 25.10.2017
(51) Int. Cl.: B60G 13/16, B60G 13/18, B60G 17/04, F16F 9/46

(54) **DISPOSITIF DE SUSPENSION À INERTIE FLUIDIQUE VARIABLE, POUR UN TRAIN DE VÉHICULE**
AUFHÄNGUNGSVORRICHTUNG MIT VARIABLER FLUIDMASSENTRÄGHEIT FÜR EIN FAHRZEUGACHSENSYSTEM
SUSPENSION DEVICE WITH VARIABLE FLUID INERTIA, FOR A VEHICLE AXLE SYSTEM

(30) Priorité: 17.11.2016 FR 1661122
(43) Date de publication de la demande: 25.09.2019
(73) Titulaire: PSA Automobiles SA, 78300 Poissy (FR)
(72) Inventeur: CHILLON, Jean, 92100 Boulogne Billancourt (FR); ROTA, Laurent, 91530 St Cheron (FR); DIMITRIJEVIC, Zoran, 91570 Bievres (FR)
(86) Numéro de dépôt international: PCT/FR2017/052946
(87) Numéro de publication internationale: WO 2018/091795

(56) Documents cités:
- EP-A1- 0 777 065
- DE-A1- 4 210 240
- DE-A1- 19 512 866
- US-A- 2 086 824
- US-A- 3 807 678
- US-A- 5 375 683
- US-A- 5 390 121
- US-A- 5 392 882
- US-A1- 2008 083 591
- US-A1- 2012 305 354

## Description

L'invention concerne les dispositifs de suspension qui équipent les trains de véhicule comportant des roues propres à rouler sur des routes ou des voies (éventuellement de chemin de fer).

Certains véhicules, généralement de type automobile, comprennent au moins un train couplé à leur caisse et comportant deux dispositifs de suspension associés respectivement à chacune des roues et comprenant chacun un ressort (généralement hélicoïdal) et un amortisseur montés en parallèle.

Ces dispositifs de suspension, parfois dits « métalliques », offrent un domaine de réglage qui est limité en raideur et en amortissement. Cela résulte du fait, d'une part, que la raideur doit être suffisamment grande pour garantir les assiettes du véhicule à vide, en charge et en fonctionnement, et suffisamment petite pour permettre une fréquence de filtrage basse (typiquement inférieure à 1,6 Hz en général), et, d'autre part, que l'amortissement doit être suffisant pour maîtriser le mode de rebond de roue et garantir la tenue de route sur sol bosselé et suffisamment souple pour permettre un filtrage des irrégularités de la roue à hautes vitesses.

Pour que de tels dispositifs de suspension puissent offrir des prestations en confort vertical de haut niveau en flexibilisant la suspension, de manière analogue aux dispositifs de suspension hydraulique dont les coûts sont très élevés, il faut leur adjoindre des moyens de correction de hauteur complexes et onéreux.

Une solution alternative, offrant des prestations de niveau intermédiaire entre le « métallique » et « l'hydraulique », consiste à utiliser un effet d'inertie.

Ainsi, il a été proposé dans le document « Investigation on semi-active control of vehicle suspension using adaptative inerter», Panshuo Li, James Lam et Kie Chung Cheung, the 21st international congress on sound and vibration, 13-17 July, 2014, Beijing/China, d'utiliser des moyens d'inertie (ou « inerter ») permettant de limiter la surtension du mode de caisse.

De même, il a été proposé dans le document « On the benefits of semi-active suspensions with inerters», Xin-Jie Zhanga, Mehdi Ahmadianb, and Kong-Hui Guo, Shock and Vibration 19 (2012) 257-272 257, DOI 10.3233/SAV-2011-0628, de contrôler l'effort optimal de suspension à apporter pour que la liaison au sol avec les moyens d'inertie ait un gain sur un critère d'énergie vibratoire du déplacement de la masse suspendue dû au roulage sur une route dégradée moyenne. On connait encore le document US3807678A correspondant au préambule de la revendication 1.

Ces solutions proposées ne s'avèrent pas satisfaisantes du fait qu'elles décalent la fréquence du mode de rebond de roue (classiquement situé dans la gamme 12 Hz - 15 Hz) autour de 5 Hz et que ce mode de rebond de roue n'est plus amorti convenablement par l'amortisseur de suspension.

L'invention a notamment pour but d'améliorer la situation dans le cas d'un dispositif de suspension métallique.

Elle propose notamment à cet effet un dispositif de suspension, destiné à faire partie d'un train de véhicule comportant des roues propres à rouler (sur une route ou une voie (éventuellement de chemin de fer)), et comprenant un ressort et un amortisseur montés en parallèle.

Ce dispositif de suspension comprend :
- un circuit inertiel comprenant au moins un premier tuyau présentant des longueur et section prédéfinies, éventuellement couplé à un réservoir de fluide, et propre à produire de façon contrôlée une inertie fluidique,
- un vérin monté en parallèle des ressort et amortisseur et comprenant une chambre couplée au premier tuyau,
- des moyens de contrôle propres à contrôler l'inertie fluidique produite par le circuit inertiel en fonction d'au moins une information représentative d'une valeur en cours d'au moins un paramètre choisi du véhicule,
- le premier tuyau comprend encore des première et seconde extrémités couplées respectivement à des entrées/sorties de la chambre et d'un réservoir de fluide, et ses moyens de contrôle comprennent des premiers moyens d'action installés entre les entrées/sorties de la chambre et du réservoir de fluide afin de contrôler la connexion/déconnexion du premier tuyau,
- le circuit inertiel comprend un deuxième tuyau présentant des longueur et section prédéfinies, et ayant une première extrémité connectée à la seconde extrémité du premier tuyau et une seconde extrémité couplée à l'entrée/sortie du réservoir de fluide,
- les moyens de contrôle comprennent également des deuxièmes moyens d'action installés entre la première extrémité du deuxième tuyau et l'entrée/sortie du réservoir de fluide afin de contrôler la connexion/déconnexion du deuxième tuyau,
- le circuit inertiel comprend également un troisième tuyau présentant des longueur et section prédéfinies, et ayant une première extrémité connectée à la seconde extrémité du deuxième tuyau et une seconde extrémité couplée à l'entrée/sortie du réservoir de fluide, les moyens de contrôle comprenant également des troisièmes moyens d'action installés entre la première extrémité du troisième tuyau et l'entrée/sortie du réservoir de fluide afin de contrôler la connexion/déconnexion du troisième tuyau.

Grâce à cette activation pilotée de l'inertie fluidique, on peut maîtriser en temps réel l'effort de suspension et garantir à la fois une maîtrise de la surtension du mode de caisse (typiquement entre 0,5 Hz et 2,0 Hz) et un excellent filtrage des tressautements (typiquement entre 2,0 Hz et 6,0 Hz), voire des trépidations (typiquement entre 6 Hz et 20 Hz).

Le dispositif de suspension selon l'invention peut comporter d'autres caractéristiques qui peuvent être prises séparément ou en combinaison, et notamment :
- chaque paramètre peut être choisi parmi (au moins) une accélération verticale du véhicule, une vitesse du véhicule, des débattements de suspension, un angle de volant du véhicule, une vitesse d'action sur un volant du véhicule, un état de la route ou voie sur laquelle circule le véhicule, une action sur un système de freinage du véhicule, une action sur une accélération du véhicule, et un mode de conduite choisi par un conducteur du véhicule,
- les moyens d'action peuvent être de type actif. Dans ce cas, ses moyens de contrôle peuvent être propres à contrôler chacun des moyens d'action en fonction d'une loi de commande qui est fonction de chaque information représentative de la valeur en cours d'au moins un paramètre choisi du véhicule ;
   - les moyens d'action peuvent être agencés sous la forme d'électrovannes à orifice de section variable. Par exemple, chaque électrovanne peut être de type tout ou rien ou proportionnel ;
      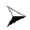 en variante, les moyens d'action peuvent être de type passif ;
         - les moyens d'action peuvent être agencés sous la forme de paires de clapets limiteurs de pression montés en parallèle selon des sens opposés ;
         - en variante, les moyens d'action peuvent être des lumières qui s'ouvrent et qui se ferment en fonction des débattements de la suspension ;
      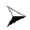 chacun des moyens d'action peut être associé à un ajutage qui est propre à induire une perte de charge choisie. En variante, son amortisseur peut être de type non linéaire ou bien piloté ;
- il peut également comprendre en parallèle du circuit inertiel une membrane de découplage propre à faire varier le débit dans le circuit inertiel en fonction de l'amplitude de débattement de la suspension. En variante, il peut comprendre un ressort non linéaire monté en série avec le vérin et comprenant une première raideur de faible valeur pour empêcher les effets de l'inertie fluidique en présence de petites amplitudes de débattement de suspension à hautes fréquences d'excitation, et une seconde raideur de forte valeur pour autoriser les effets de l'inertie fluidique en présence de grandes amplitudes de débattement de suspension à basses fréquences d'excitation.

L'invention propose également un véhicule, éventuellement de type automobile, et comprenant au moins un train comportant des roues propres à rouler (sur une route ou une voie) et deux dispositifs de suspension du type de celui présenté ci-avant.

D'autres caractéristiques et avantages de l'invention apparaîtront à l'examen de la description détaillée ci-après, et des dessins annexés, sur lesquels :
- la figure 1 illustre schématiquement, dans une vue en coupe, une partie d'un exemple de train de véhicule équipé d'un premier exemple de réalisation d'un dispositif de suspension selon l'invention, à réservoir de fluide externe,
- la figure 2 illustre schématiquement, dans une vue en coupe, une partie d'un exemple de train de véhicule équipé d'une variante du dispositif de suspension de la figure 1, à réservoir de fluide interne,
- la figure 3 illustre schématiquement, dans une vue en coupe, une partie d'un exemple de train de véhicule équipé d'un second exemple de réalisation d'un dispositif de suspension selon l'invention à réservoir de fluide externe, et
- la figure 4 illustre schématiquement, dans une vue en coupe, une partie d'un exemple de train de véhicule équipé d'une variante du dispositif de suspension de la figure 3, à réservoir de fluide interne.

L'invention a notamment pour but de proposer un dispositif de suspension DS destiné à équiper un train TV (avant ou arrière) d'un véhicule.

Dans ce qui suit, on considère, à titre d'exemple non limitatif, que le train TV est destiné à équiper un véhicule automobile, comme par exemple une voiture. Mais l'invention n'est pas limitée à ce type de véhicule. Elle concerne en effet tout véhicule comportant au moins un train solidarisé à une partie de sa caisse et pouvant rouler sur une route ou une voie (éventuellement de chemin de fer).

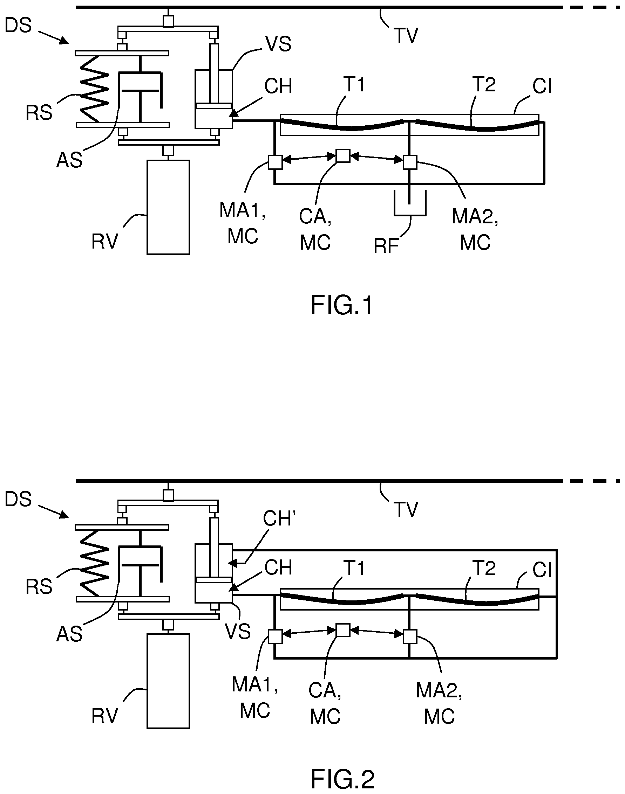

On a schématiquement représenté sur les figures 1 à 4 deux parties d'un train TV de véhicule automobile, équipées respectivement de deux exemples de réalisation d'un dispositif de suspension DS selon l'invention.

Comme illustré, un dispositif de suspension DS, selon l'invention, comprend au moins un ressort RS, un amortisseur AS, un circuit inertiel CI, un vérin VS et des moyens de contrôle MC.

Le ressort RS et l'amortisseur AS sont montés en parallèle. Par exemple, le ressort RS est de type hélicoïdal.

Le vérin VS est monté en parallèle des ressort RS et amortisseur AS, et comprend au moins une chambre CH couplée au circuit inertiel CI. On notera que le vérin VS pourrait abriter la fonction assurée par l'amortisseur AS en lieu et place de ce dernier (AS).

Le circuit inertiel CI comprend au moins un premier tuyau T1 qui présente des longueur et section prédéfinies, et est propre à produire une inertie fluidique sous le contrôle des moyens de contrôle MC, comme on le verra plus loin. Le fluide peut, par exemple, être une huile, comme par exemple celle qui est utilisée classiquement dans les amortisseurs.

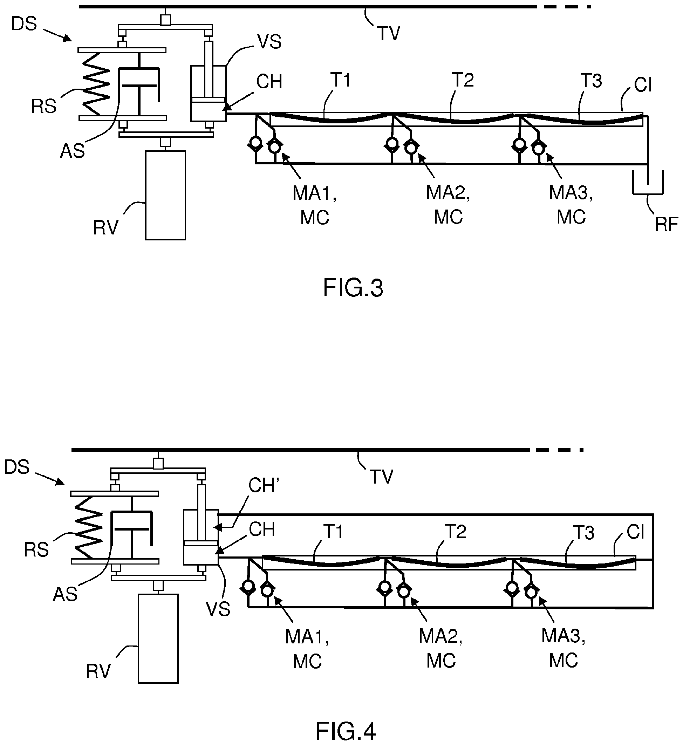

On notera que ce premier tuyau T1 (et plus généralement le circuit inertiel CI) peut être couplé soit à un réservoir de fluide RF dit externe, comme cela est illustré non limitativement sur les figures 1 et 3, soit à un réservoir de fluide CH' dit interne du fait qu'il s'agit d'une seconde chambre du vérin VS, située derrière la chambre CH et dans laquelle se translate la tige qui est solidarisée fixement au piston et qui sert alors de réservoir de fluide, comme cela est illustré non limitativement sur les figures 2 et 4. En d'autres termes, dans la première alternative le circuit inertiel CI est monté entre la chambre CH et le réservoir de fluide externe RF, tandis que dans la seconde alternative le circuit inertiel CI est monté entre la chambre CH (du vérin VS) et la seconde chambre (ou réservoir de fluide interne) CH' de ce dernier (VS).

On notera également que ce premier tuyau T1 peut être rigide ou flexible, par exemple pour mieux maîtriser l'impact des débattements de suspension.

Les moyens de contrôle MC sont propres à contrôler l'inertie fluidique produite par le circuit inertiel CI en fonction d'au moins une information représentative d'une valeur en cours d'au moins un paramètre choisi du véhicule.

Chaque paramètre peut être choisi parmi au moins l'accélération verticale (de la caisse) du véhicule, la vitesse du véhicule, les débattements de suspension, l'angle du volant du véhicule, la vitesse d'action sur le volant, l'état de la route ou voie sur laquelle circule le véhicule, l'action sur le système de freinage du véhicule, l'action sur l'accélération du véhicule, et un mode de conduite choisi par le conducteur du véhicule (par exemple confort, sport ou économique). D'une manière générale on peut utiliser au moins un paramètre représentatif de la dynamique du véhicule, de l'état de la route ou voie ou d'une action effectuée par le conducteur et ayant une influence sur le comportement du véhicule.

Chaque information utilisée peut être une valeur en cours d'un paramètre ou le résultat d'un calcul effectué en temps réel au moyen d'au moins un algorithme embarqué.

On dispose ainsi d'un dispositif de suspension DS dans lequel l'inertie fluidique, qui est apportée avec un effet de levier fonction du rapport entre la section du piston du vérin VS et la section du premier tuyau T1 (et d'éventuels tuyaux suivants), peut prendre des valeurs discrètes grâce aux différents tuyaux du circuit inertiel CI. Cet effet de levier permet de créer des inerties pouvant atteindre plusieurs centaines de kilogrammes.

Un tel dispositif de suspension DS garantit les assiettes statiques du véhicule du fait que le ressort RS utilisé peut être identique à celui que comprend un dispositif de suspension métallique de l'art antérieur.

De plus, il permet un réglage par l'inertie fluidique de la fréquence de filtrage de suspension (par exemple pour atteindre une valeur égale à 1 Hz), et un filtrage des excitations de la route similaire à celui offert par une suspension hydraulique (typiquement entre deux et trois Hertz). Cela résulte du fait que l'inertie fluidique en mouvement s'ajoute à la masse portée du véhicule et donc permet de baisser la fréquence de filtrage de la suspension à la valeur requise (ou choisie) en dimensionnant correctement la longueur et la section du premier tuyau T1 et d'éventuels tuyaux suivants (l'inertie fluidique est proportionnelle à la longueur du tuyau et inversement proportionnelle à la section de passage du tuyau). Par exemple, la longueur de l'ensemble des tuyaux (au moins T1) peut être comprise entre 10 cm et 1000 cm, et la section de passage des tuyaux (au moins T1) peut être comprise entre 1 mm² et 1000 mm².

Par exemple, et comme illustré non limitativement sur les figures 1 à 4, le premier tuyau T1 peut comprendre des première et seconde extrémités qui sont couplées respectivement à des entrées/sorties de la chambre CH et du réservoir de fluide (externe) RF ou (interne) CH'. Dans ce cas, les moyens de contrôle MC comprennent des premiers moyens d'action MA1 installés entre les entrées/sorties de la chambre CH et du réservoir de fluide (externe) RF ou (interne) CH' afin de contrôler la connexion/déconnexion du premier tuyau T1. Par exemple, le réservoir de fluide externe RF peut être placé à la pression atmosphérique.

En présence d'un réservoir de fluide externe RF l'entrée/sortie du circuit inertiel CI communique avec ce dernier (RF). En présence d'un réservoir de fluide interne (ou seconde chambre) CH', l'entrée/sortie du circuit inertiel CI peut communiquer avec la seconde chambre CH' du vérin VS, qui est située derrière la chambre CH et dans laquelle se translate la tige qui est solidarisée fixement au piston.

Comme évoqué précédemment, le circuit d'inertie CI peut comprendre plusieurs tuyaux Tj montés en série. Cette option est destinée à augmenter le nombre de valeurs différentes de l'inertie fluidique que l'on peut obtenir.

Ainsi, dans le premier exemple de réalisation illustré non limitativement sur les figures 1 et 2, le circuit inertiel CI comprend en complément du premier tuyau T1 (j = 1) un deuxième tuyau T2 (j = 2) présentant des longueur et section prédéfinies, et ayant une première extrémité connectée à la seconde extrémité du premier tuyau T1 et une seconde extrémité couplée à l'entrée/sortie du réservoir de fluide externe RF (figure 1) ou interne CH' (figure 2). Dans ce cas, les moyens de contrôle MC comprennent également des deuxièmes moyens d'action MA2 installés entre la première extrémité du deuxième tuyau T2 et l'entrée/sortie du réservoir de fluide externe RF ou interne CH' afin de contrôler la connexion/déconnexion du deuxième tuyau T2.

Les longueur et section du deuxième tuyau T2 peuvent être identiques à, ou différentes de, celles du premier tuyau T1. Cela offre un degré de liberté supplémentaire afin de maîtriser à la fois l'inertie fluidique et les pertes de charge visqueuses dans les tuyaux et donc d'optimiser la réponse vibratoire de la suspension.

Dans le second exemple de réalisation illustré non limitativement sur les figures 3 et 4, le circuit inertiel CI comprend en complément des premier T1 et deuxième T2 tuyaux un troisième tuyau T3 (j = 3) présentant des longueur et section prédéfinies, et ayant une première extrémité connectée à la seconde extrémité du deuxième tuyau T2 et une seconde extrémité couplée à l'entrée/sortie du réservoir de fluide externe RF (figure 3) ou interne CH' (figure 4). Dans ce cas, les moyens de contrôle MC comprennent également des troisièmes moyens d'action MA3 installés entre la première extrémité du troisième tuyau T3 et l'entrée/sortie du réservoir de fluide externe RF ou interne CH' afin de contrôler la connexion/déconnexion du troisième tuyau T3.

Les longueur et section du troisième tuyau T3 peuvent être identiques à, ou différentes de, celles des premier T1 et deuxième T2 tuyaux. Cela offre un autre degré de liberté supplémentaire afin de maîtriser à la fois l'inertie fluidique et les pertes de charge visqueuses dans les tuyaux et donc d'optimiser la réponse vibratoire de la suspension.

Le nombre N de valeurs d'inertie fluidique disponibles dépend du nombre de tuyaux mis en série et du nombre de moyens d'action MAj associés à chacun de ces tuyaux. Plus précisément, en présence de N tuyaux et de N moyens d'action MAj, on dispose de N+1 valeurs d'inerties discrètes disponibles.

On notera que les moyens d'action MAj (ici j = 1 à 3) peuvent être de type actif ou passif.

Lorsque les moyens d'action MAj sont actifs, comme illustré non limitativement sur les figures 1 et 2, les moyens de contrôle MC sont propres à contrôler chacun d'entre eux en fonction d'une loi de commande qui est fonction de chaque information représentative de la valeur en cours d'au moins un paramètre choisi du véhicule. Pour ce faire, les moyens de contrôle MC comprennent une partie dédiée au contrôle et chargée de déterminer à chaque instant avec la loi de commande, pour chacun des moyens d'action MAj, une commande. Cette partie dédiée est par exemple implantée dans un calculateur CA, comme illustré non limitativement sur les figures 1 et 2. Mais elle pourrait comprendre son propre calculateur. Par conséquent, cette partie dédiée peut être réalisée soit sous la forme de modules logiciels (ou informatiques (ou encore « software »)), soit sous la forme d'une combinaison de modules logiciels et de circuits électroniques (ou « hardware »).

Par exemple, les moyens d'action MAj actifs peuvent être agencés sous la forme d'électrovannes (ou robinets) à orifice de section variable. Dans ce cas, chaque électrovanne peut, par exemple être de type tout ou rien ou bien de type proportionnel.

Lorsque les moyens d'action MAj sont passifs, ils peuvent, par exemple et comme illustré non limitativement sur les figures 3 et 4, être agencés sous la forme de paires de clapets limiteurs de pression montés en parallèle selon des sens opposés pour contraindre la pression à rester dans un domaine limité de variation autour d'une pression de tarage. En variante, les moyens d'action MAj (passifs) peuvent être des lumières qui s'ouvrent et qui se ferment en fonction des débattements de la suspension.

On notera qu'afin d'améliorer le filtrage des petites amplitudes, le dispositif de suspension DS peut, par exemple, comprendre en parallèle de son circuit inertiel CI une membrane de découplage propre à faire varier le débit dans le circuit inertiel CI en fonction de l'amplitude de débattement de la suspension. Plus précisément, cette membrane de découplage est destinée à bloquer le fluide (et donc activer l'inertie fluidique) en présence d'une forte amplitude de déplacement du piston du vérin VS, et à laisser passer le fluide (et donc désactiver l'inertie fluidique) en présence d'une faible amplitude de déplacement du piston du vérin VS. Par exemple, cette membrane de découplage peut être logée dans un logement dédié défini dans le piston du vérin VS et communiquant via des trous avec la chambre CH de ce dernier (VS) et avec la partie arrière du vérin VS dans laquelle se translate la tige qui est solidarisée fixement au piston. Cette membrane de découplage peut, par exemple, être réalisée en caoutchouc, éventuellement synthétique.

En variante, le dispositif de suspension DS peut, par exemple, également comprendre un ressort non linéaire monté en série avec le vérin VS et comprenant une première raideur de faible valeur pour empêcher (ou filtrer) les effets de l'inertie fluidique en présence de petites amplitudes de débattement de suspension à hautes fréquences d'excitation, typiquement supérieures à 8 Hz, et une seconde raideur de forte valeur pour autoriser (ou exciter) les effets de l'inertie fluidique en présence de grandes amplitudes de débattement de suspension à basses fréquences d'excitation, typiquement inférieures à 3 Hz.

On notera également qu'afin d'améliorer l'amortissement du mode de caisse en présence de petites excitations de la route, chacun des moyens d'action MAj peut être associé à un ajutage qui est propre à induire une perte de charge choisie. En variante, on peut utiliser un amortisseur AS non linéaire ou bien piloté.

Grâce à l'invention, un dispositif de suspension métallique peut désormais offrir des performances de confort vertical quasiment au niveau de celles qui sont offertes par les dispositifs de suspension hydrauliques, pour un surcout faible dans le cas de l'utilisation de moyens d'action passifs et un surcout modéré dans le cas de l'utilisation de moyens d'action actifs et pilotés.

## Revendications

1. Dispositif de suspension (DS) pour un train (TV) de véhicule comportant des roues propres à rouler, ledit dispositif (DS) comprenant un ressort (RS) et un amortisseur (AS) montés en parallèle, et comprend en outre i) un circuit inertiel (CI) comprenant au moins un premier tuyau (T1) présentant des longueur et section prédéfinies, et propre à produire de façon contrôlée une inertie fluidique, ii) un vérin (VS) monté en parallèle desdits ressort (RS) et amortisseur (AS) et comprenant une chambre (CH) couplée audit premier tuyau (T1), et iii) des moyens de contrôle (MC) propres à contrôler ladite inertie fluidique produite par ledit circuit inertiel (CI) en fonction d'au moins une information représentative d'une valeur en cours d'au moins un paramètre choisi du véhicule, ledit premier tuyau (T1) comprend des première et seconde extrémités couplées respectivement à des entrées/sorties de ladite chambre (CH) et d'un réservoir de fluide (RF, CH'), et lesdits moyens de contrôle (MC) comprennent des premiers moyens d'action (MA1) installés entre lesdites entrées/sorties de la chambre (CH) et dudit réservoir de fluide (RF, CH') afin de contrôler la connexion/déconnexion dudit premier tuyau (T1), ledit circuit inertiel (CI) comprenant un deuxième tuyau (T2) présentant des longueur et section prédéfinies, et ayant une première extrémité connectée à ladite seconde extrémité du premier tuyau (T1) et une seconde extrémité couplée à ladite entrée/sortie du réservoir de fluide (RF, CH'), lesdits moyens de contrôle (MC) comprenant également des deuxièmes moyens d'action (MA2) installés entre ladite première extrémité du deuxième tuyau (T2) et ladite entrée/sortie du réservoir de fluide (RF, CH') afin de contrôler la connexion/déconnexion dudit deuxième tuyau (T2), **caractérisé en ce que** ledit circuit inertiel (CI) comprend un troisième tuyau (T3) présentant des longueur et section prédéfinies, et ayant une première extrémité connectée à ladite seconde extrémité du deuxième tuyau (T2) et une seconde extrémité couplée à ladite entrée/sortie du réservoir de fluide (RF, CH'), et **en ce que** lesdits moyens de contrôle (MC) comprennent également des troisièmes moyens d'action (MA3) installés entre ladite première extrémité du troisième tuyau (T3) et ladite entrée/sortie du réservoir de fluide (RF, CH') afin de contrôler la connexion/déconnexion dudit troisième tuyau (T3).

2. Dispositif selon la revendication 1, **caractérisé en ce que** chaque paramètre peut être choisi dans un groupe comprenant une accélération verticale dudit véhicule, une vitesse dudit véhicule, des débattements de suspension, un angle de volant dudit véhicule, une vitesse d'action sur un volant dudit véhicule, un état d'une route ou voie sur laquelle circule ledit véhicule, une action sur un système de freinage dudit véhicule, une action sur une accélération dudit véhicule, et un mode de conduite choisi par un conducteur dudit véhicule.

3. Dispositif selon l'une des revendications 1 à 2, **caractérisé en ce que** lesdits moyens d'action (MAj) sont de type actif, et **en ce que** lesdits moyens de contrôle (MC) sont propres à contrôler chacun desdits moyens d'action (MAj) en fonction d'une loi de commande fonction de chaque information représentative de la valeur en cours d'au moins un paramètre choisi du véhicule.

4. Dispositif selon la revendication 3, **caractérisé en ce que** lesdits moyens d'action (MAj) sont agencés sous la forme d'électrovannes à orifice de section variable.

5. Dispositif selon l'une des revendications 1 à 2, **caractérisé en ce que** lesdits moyens d'action (MAj) sont de type passif.

6. Dispositif selon l'une des revendications 1 à 5, **caractérisé en ce qu'**il comprend soit en parallèle dudit circuit inertiel (CI) une membrane de découplage propre à faire varier le débit dans ledit circuit inertiel (CI) en fonction d'une amplitude de débattement de la suspension, soit un ressort non linéaire monté en série avec ledit vérin (VS) et comprenant une première raideur de faible valeur pour empêcher les effets de l'inertie fluidique en présence de petites amplitudes de débattement de suspension à hautes fréquences d'excitation, et une seconde raideur de forte valeur pour autoriser les effets de l'inertie fluidique en présence de grandes amplitudes de débattement de suspension à basses fréquences d'excitation.

7. Véhicule comprenant au moins un train (TV) comportant des roues propres à rouler, **caractérisé en ce que** ledit train (TV) comprend deux dispositifs de suspension (DS) selon l'une des revendications précédentes.

## Patentansprüche

1. Eine Suspension (DS) für einen Zug (TV) ein Fahrzeugrädern zu Rolle angepasst, wobei die Einrichtung (DS), umfassend eine Feder (RS) und ein Stoßdämpfer (AS) parallel geschaltet ist, und umfasst weiterhin i) ein Trägheitskreis (CI), der mindestens ein erstes Rohr (T1) mit einer vordefinierten Länge und einem vordefinierten Abschnitt umfasst und in der Lage ist, auf kontrollierte Weise eine Fluidträgheit zu erzeugen, ii) einen Wagenheber (VS), der parallel zu den Federn (RS) montiert ist, und Stoßdämpfer (AS) und umfassend eine Kammer (CH) mit dem ersten Rohr (T1), und iii) Steuermittel (MC) angepasst ist, um zu steuern die genannten Fluidträgheit erzeugt die durch Trägheits Schaltung (IC) als eine Funktion von mindestens einer Informationen, die für einen aktuellen Wert von mindestens einem ausgewählten Parameter des Fahrzeugs repräsentativ sind, Das erste Rohr (T1) umfasst ein erstes und ein zweites Ende, die jeweils mit Einlässen/Auslässen der Kammer (CH) und eines Fluidreservoirs (RF, CH') verbunden sind, und das Steuermittel (MC) umfasst ein installiertes erstes Aktionsmittel (MA1) zwischen den Einlässen/Auslässen der Kammer (CH) und der Fluidvorratsbehälter (RF, CH'), um die Verbindung/Trennung des genannten zu steuern ersten Rohr (T1), die Trägheits Schaltung (CI) gehören ant ein zweites Rohr (T2) mit einer vorbestimmten Länge und einem vorbestimmten Abschnitt und einem ersten Ende, das mit dem zweiten Ende des ersten Rohrs (T1) verbunden ist, und einem zweiten Ende, das mit dem Eingang/Ausgang des Fluidreservoirs (RF, CH') verbunden ist, wobei die Steuermittel (MC) umfassen eine Ameise, auch ein zweites Wirkmittel (MA2), das zwischen dem ersten Ende des zweiten Rohrs (T2) und dem Eingang/Ausgang des Fluidreservoirs (RF, CH') installiert ist, um das Verbinden/Trennen des zweiten zu steuern Rohr (T2) **dadurch gekennzeichnet, dass** der Trägheitskreis (CI) ein drittes Rohr (T3) mit einer vordefinierten Länge und einem vordefinierten Abschnitt und einem ersten Ende, das mit dem zweiten Ende des zweiten Rohrs (T2) verbunden ist, und einem zweiten Ende, das mit dem Einlass/Auslass verbunden ist, umfasst des Fluidreservoirs (RF, CH') und darin, dass das Steuermittel (MC) auch ein drittes Aktionsmittel (MA3) umfasst, das zwischen dem ersten Ende des dritten Rohrs (T3) und dem Einlass/Auslass des Fluidreservoirs (RF, CH '), um das Verbinden/Trennen des dritten Rohrs (T3) zu steuern.

2. Vorrichtung nach Anspruch 1, **dadurch gekennzeichnet, dass** jeder Parameter aus einer Gruppe ausgewählt werden kann, die eine vertikale Beschleunigung des Fahrzeugs, eine Geschwindigkeit des
Fahrzeugs, Aufhängungsauslenkungen, einen Lenkradwinkel
des Fahrzeugs, eine Wirkgeschwindigkeit auf ein Lenkrad umfasst von dem Fahrzeug einen Zustand einer Straße oder Fahrspur, auf der das Fahrzeug fährt, eine Wirkung auf ein Bremssystem des Fahrzeugs, eine Wirkung auf die Beschleunigung des Fahrzeugs und einen von einem Fahrer des Fahrzeugs gewählten Fahrmodus.

3. Vorrichtung nach einem der Ansprüche 1 bis 2, **dadurch**
**gekennzeichnet, dass** das Aktionsmittel (MAJ) des aktiven Typ sind, und dadurch, dass die Steuermittel (MC) sind geeignet für jede der Aktionsmittel (Steuerung MAJ) nach einem Gesetz Kontrolle f unktion für jedes repräsentative Information des aktuellen Wertes von mindestens einem Parameter ausgewählt Fahrzeug.

4. Vorrichtung nach Anspruch 3, **dadurch gekennzeichnet, dass** die genannten Aktionsmittel (MAj) in Form von Magnetventilen mit Öffnung mit variablem Querschnitt angeordnet sind.

5. Vorrichtung nach einem der Ansprüche 1 bis 2, **dadurch gekennzeichnet, dass** die genannten Aktionsmittel (MAj) vom passiven Typ sind.

6. Vorrichtung nach einem der Ansprüche 1 bis 5, **dadurch gekennzeichnet, daß** sie umfaßt entweder parallel die Trägheitsschaltung (IC) eine Membran Entkopplung der Lage des Veränderns der Strömungsgeschwindigkeit in
der genannten Trägheits Schaltung (IC) nach Amplitude der Ablenkung des die Aufhängung oder eine nichtlineare Feder, die in Reihe mit dem Zylinder (VS) geschaltet ist und einen niedrigen Wert für die erste Steifheit aufweist, um die Auswirkungen der Fluidträgheit bei Vorhandensein kleiner Auslenkungsamplituden hoher Aufregungsfrequenzen der
Aufhängung zu verhindern, und eine zweite Steifheit von hoher Wert, um die Auswirkungen der Fluidträgheit bei Vorhandensein großer Amplituden der Suspensionsauslenkung bei niedrigen Anregungsfrequenzen zu ermöglichen.

7. Vehicle umfassend mindestens einen Zug (TV) mit eigenen Rädern zu rollen,
**dadurch gekennzeichnet, daß** Bahn (TV) umfasst zwei Disposit Eibe Suspension (DS) nach einem der vorhergehenden Ansprüche.

## Claims

1. A suspension (DS) for a train (TV) of a vehicle having wheels adapted to roll, said device (DS) comprising a spring (RS) and a shock absorber (AS) connected in parallel, and comprises further i) an inertial circuit (CI) comprising at least a first pipe (T1) having predefined length and section, and capable of producing fluid inertia in a controlled manner, ii) a jack (VS) mounted in parallel with said springs (RS) and shock absorber (AS) and comprising a chamber (CH) coupled to said first pipe (T1), and iii) means of
control (MC) adapted to control OLER the said fluid inertia generated by said inertial circuit (IC) as a function of at least one information representative of a current value of at least one chosen parameter of the vehicle, said first pipe (T1) comprises first and second ends respectively coupled to inlets/outlets of said chamber (CH) and of a fluid reservoir (RF, CH'), and said control means (MC) comprises first action means (MA1) installed between said inlets/outlets of the chamber (CH) and of said fluid reservoir (RF, CH') in order to control the connection/disconnection of said first pipe (T1), said inertial circuit (CI) including a second pipe (T2) having predetermined length and section, and having a first end connected to said second end of the first pipe (T1) and a second end coupled to said input/output of the fluid reservoir (RF, CH'), said control means (MC) include an ant also second means of action (MA2) installed between said first end of the second pipe (T2) and said input/output of the fluid reservoir (RF, CH') to control the connection/disconnection of said second pipe (T2), **characterized in that** said inertial circuit (CI) comprises a third pipe (T3) having predefined length and section, and having a first end connected to said second end of the second pipe (T2) and a second end coupled to said inlet/outlet of the fluid reservoir (RF, CH'), and **in that** said control means (MC) also comprise third action means (MA3) installed between said first end of the third pipe (T3) and said inlet/outlet of the fluid reservoir (RF, CH') in order to control the connection/disconnection of said third pipe (T3).

2. Device according to Claim 1, **characterized in that** each parameter can be chosen from a group comprising a vertical acceleration of said vehicle, a speed of said vehicle, suspension deflections, a steering wheel angle of said vehicle, a speed of action on a steering wheel of said vehicle, a state of a road or lane on which said vehicle is traveling, action on a braking system of said vehicle, action on acceleration of said vehicle, and a driving mode chosen by a driver of said vehicle.

3. Device according to one of claims 1 to 2, **characterized in that** said action means (MAj) are of the active type, and **in that** said control means (MC) are suitable for controlling each of said action means (MAj) according to a law of control function of each information representative of the current value of at least one parameter selected vehicle.

4. Device according to claim 3, **characterized in that** the said action means (MAj) are arranged in the form of solenoid valves with orifice of variable section.

5. Device according to one of claims 1 to 2, **characterized in that** the said action means (MAj) are of the passive type.

6. Device according to one of claims 1 to 5, **characterized in that** it comprises either in parallel said inertial circuit (IC) a
membrane decoupling capable of varying the flow rate in the said inertial circuit (IC) as a function of a suspension travel amplitude, or a non-linear spring connected in series with said cylinder (VS) and comprising a first stiffness low value to prevent the effects of fluid inertia in the presence of small amplitudes of deflection of suspension high excitation frequencies, and a second stiffness of high value to allow the effects of fluid inertia in the presence of large amplitudes of suspension deflection at low excitation frequencies .

7. Vehicle comprising at least one train (T V) having own wheels to roll, **characterized in that** said train (TV) comprises two Disposit yew suspension (DS) according to one of the preceding claims.
